# EUROPÄISCHE PATENTANMELDUNG

(11) **EP 0 978 571 A1**
(43) Veröffentlichungstag der Anmeldung: **09.02.2000**
(21) Anmeldenummer: 99115254.7
(22) Anmeldetag: 02.08.1999
(51) Int. Cl.: C21C 5/52, C21C 5/46, C21C 5/30, F27D 3/16

(54) **Verfahren zum pulsartigen Eintragen von Sauerstoff und/oder eines sauerstoffhaltigen Gasgemisches in eine Schmelze**

(30) Priorität: 04.08.1998 DE 19835272
(71) Anmelder: Linde Aktiengesellschaft, 65189 Wiesbaden (DE)
(72) Erfinder: Strigl, Reinhard, Dipl.-Ing., 80995 München (DE)
(74) Vertreter: Zahn, Christoph

(57) **Zusammenfassung**

Verfahren zum Eintragen von Sauerstoff und/oder eines Sauerstoff-haltigen Gasgemisches in eine Schmelze, wobei der Sauerstoff und/oder das Sauerstoffhaltige Gasgemisch der Schmelze während des Anstieges des Kohlenmonoxidanteiles in der Schmelze und/oder während der Frisch- oder Entkohlungsphase zugeführt werden.

Erfindungsgemäß erfolgt die Zuführung des Sauerstoffs und/oder Sauerstoff-haltigen Gasgemisches gepulst.

Erfolgt die Zuführung des Sauerstoffs und/oder Sauerstoff-haltigen Gasgemisches über eine gemeinsame oder wenigstens zwei separate Gasversorgungsleitungen und werden jeweils wenigstens ein Absperrventil sowie eine dieses Absperrventil umgehende Bypass-Leitung in der bzw. den Gasversorgungsleitungen vorgesehen, so erfolgt vorzugsweise bei geschlossenem Absperrventil eine Grundbeaufschlagung mit einer Menge von 0,1 bis 0,5 der Puls-Gasmenge des Sauerstoffs und/oder Sauerstoff-haltigen Gasgemisches.

## Beschreibung

Die Erfindung betrifft ein Verfahren zum Eintragen von Sauerstoff und/oder eines Sauerstoff-haltigen Gasgemisches in eine Schmelze, wobei der Sauerstoff und/oder das Sauerstoff-haltige Gasgemisch der Schmelze während des Anstieges des Kohlenmonoxidanteiles in der Schmelze und/oder während der Frisch- oder Entkohlungsphase zugeführt werden.

Bei dem Erschmelzen von Stahl - beispielsweise in einem Elektrolichtbogenofen - entstehen während zweier Phasen des Schmelzprozesses hohe Kohlenmonoxidmengen im Ofengas. Die erste Phase umfaßt das Einschmelzen des gesetzten Schrotts - aus der Verbrennung von Lack, Öl und Kunststoffresten im Schrott -, während die zweite Phase das Frischen der Schmelze mit Eisenoxid und direkt in die Schmelze sowie Schlacke eingeblasenen Sauerstoff umfaßt. Darüber hinaus kommt es auch während der Frischen- oder Entkohlungsphasen zu einem Anstieg der Kohlenmonoxidkonzentration in der Schmelze sowie in der Ofenatmosphäre.

Der Gehalt an Kohlenmonoxid wird analytisch im Ofenabgas erfaßt und bei einem Anstieg des Kohlenmonoxidgehalts wird mit der Einleitung von zusätzlichem Sauerstoff in den Ofen begonnen. Der benötigte zusätzliche Sauerstoff kann mittels einer überstöchiometrischen Fahrweise der Brenner und/oder mittels zusätzlich installierter, bspw. wassergekühlter Sauerstofflanzen und/oder -düsen, ggf. mittels sog. selbstverzehrender Sauerstofflanzen und/oder -düsen eingebracht werden.

Im Zusammenhang mit diesem Sauerstoffeintrag ist darauf zu achten, daß der Sauerstoff möglichst "weich" und tangential in das Ofengefäß eingeführt wird, damit der Sauerstoff mit dem Kohlenmonoxid im wesentlich im Ofenraum und nicht erst in der Abgasleitung verbrennt. Da der für die Nachverbrennung des Kohlenmonoxids in den Ofenraum eingebrachte Sauerstoff zur Gänze im Ofenraum mit dem Kohlenmonoxid reagieren soll, werden ein Vielzahl von Sauerstoffeinspeisestellen an unterschiedlichen Punkten des Ofens - also beispielsweise in mehreren Ebenen, möglichst nahe über dem Schlackenbad, gegebenenfalls auch sog. Unterbadlanzen - vorgesehen. Der Sauerstoffeintrag erfolgt während der analytisch erfaßten "Hoch-Kohlenmonoxid-Phase" kontinuierlich.

Mittels einer derartigen Kohlenmonoxidnachverbrennung können etwa 4 bis 8 % an elektrischer Energie - die ansonsten für das Einschmelzen benötigt würden - eingespart werden.

Nachteilig bei dieser Verfahrensweise ist jedoch, daß der Verbrauch an der Schmelze zugeführtem Sauerstoff und/oder Sauerstoff-haltigen Gasgemisch deutlich ansteigt.

Aufgabe der vorliegenden Erfindung ist es, ein gattungsgemäßes Verfahren zum Eintragen von Sauerstoff und/oder eines Sauerstoff-haltigen Gasgemisches in eine Schmelze anzugeben, das einen geringeren Sauerstoffmehrverbrauch mit sich bringt.

Das erfindungsgemäße Verfahren zum Betreiben eines Schachtofens ist dadurch gekennzeichnet, daß die Zuführung des Sauerstoffs und/oder Sauerstoff-haltigen Gasgemisches gepulst erfolgt.

Die Zuführung des Sauerstoffs und/oder Sauerstoff-haltigen Gasgemisches in Form von Pulsen ermöglicht es, daß auf den erwähnten "weichen" Eintrag des Sauerstoffs verzichtet werden kann. Stattdessen wird der Sauerstoff mit einem höheren Impuls - also mit einer höheren Geschwindigkeit - in den Ofenraum eingebracht. Diese Verfahrensweise hat zur Folge, daß die Durchwirbelung und Vermischung mit dem Ofengas verbessert wird und zudem ein größerer Bereich des Ofenraumes pro Sauerstofflanze bzw. -düse erfaßt werden kann. Der eingebrachte Sauerstoff kann dadurch besser ausreagieren, weshalb es zu einem Absinken des spezifischen Sauerstoffverbrauchs kommt.

Insbesondere dann, wenn der Sauerstoff und/oder das Sauerstoff-haltige Gasgemisch während der Frischen- oder Entkohlungsphasen möglichst unmittelbar in die Schmelze eingeführt wird, wird durch das erfindungsgemäße Verfahren die Erzeugung eines "harten" Gasstrahles - wie er bisher nur durch den Einsatz spezieller, aufwendiger Lanzen- oder Düsenkonstruktionen erreichbar ist - ermöglicht.

Während der Sauerstoffverbrauch für die beschriebene, herkömmliche Kohlenmonoxidnachverbrennung im Regelfall zwischen 7 und 12 m³ Sauerstoff pro Tonne Flüssigeisen beträgt, kann diese Menge mittels des erfindungsgemäßen Verfahrens um 10 bis 20 % - bei unverändertem Wirkungsgrad der Kohlenmonoxidnachverbrennung - verringert werden.

Pro Schmelzvorgang kann die Nachverbrennungsphase zwischen 10 und 40 min. betragen. Mittels des erfindungsgemäßen Verfahrens kann die Chargendauer (Tap-zu-Tap-Zeit) um 1 bis 2 min. verkürzt werden. Durch die intensivere Verbrennung des Sauerstoffs kann diese Zeit nochmals um 0,2 bis 0,5 min. reduziert werden.

Da aufgrund des erhöhten Impulses die Verbrennung des Sauerstoffs weiter im Ofeninneren stattfindet - also weniger im Bereich der Ofenwandung - und zudem den Verbrennungsphasen "kühlere Phasen" folgen, sinkt die thermische Belastung der Ofenwände sowie des Ofendeckels.

Eine vorteilhafte Ausgestaltung des erfindungsgemäßen Verfahrens, bei dem die Zuführung des Sauerstoffs und/oder Sauerstoff-haltigen Gasgemisches über eine gemeinsame oder wenigstens zwei separate Gasversorgungsleitungen erfolgt und jeweils wenigstens ein Absperrventil sowie eine dieses Absperrventil umgehende Bypass-Leitung in der bzw. den Gasversorgungsleitungen vorgesehen sind, ist dadurch gekennzeichnet, daß bei geschlossenem Absperrventil eine Grundbeaufschlagung mit einer Menge von 0,1 bis 0,5 der Puls-Gasmenge des Sauerstoffs und/oder Sauerstoff-haltigen Gasgemisches erfolgt.

Eine derartige Grundbeaufschlagung der für die Eintragung des Sauerstoffs und/oder Sauerstoff-haltigen Gasgemisches verwendeten Lanzen und/oder Düsen ist zum Schutz der Lanzen bzw. Düsen sinnvoll.

Bei der Realisierung des erfindungsgemäßen Verfahrens wird in den Zuleitungen zu den Lanzen und/oder Düsen ein schnell öffnendes und schließendes Magnet- oder Pneumatikventil eingesetzt, das von einem Pulsator und dem Kohlenmonoxidsignal der Abgasanalyseeinrichtung angesteuert wird. Die Frequenz für die Öffnungszeiten des Ventils ist an dem Pulsator einstellbar.

## Patentansprüche

1. Verfahren zum Eintragen von Sauerstoff und/oder eines Sauerstoff-haltigen Gasgemisches in eine Schmelze, wobei der Sauerstoff und/oder das Sauerstoffhaltige Gasgemisch der Schmelze während des Anstieges des Kohlenmonoxidanteiles in der Schmelze und/oder während der Frisch- oder Entkohlungsphase zugeführt werden, **dadurch gekennzeichnet**, daß die Zuführung des Sauerstoffs und/oder Sauerstoff-haltigen Gasgemisches gepulst erfolgt.

2. Verfahren nach Anspruch 1, wobei die Zuführung des Sauerstoffs und/oder Sauerstoff-haltigen Gasgemisches über eine gemeinsame oder wenigstens zwei separate Gasversorgungsleitungen erfolgt und jeweils wenigstens ein Absperrventil sowie eine dieses Absperrventil umgehende Bypass-Leitung in der bzw. den Gasversorgungsleitungen vorgesehen sind, dadurch gekennzeichnet, daß bei geschlossenem Absperrventil eine Grundbeaufschlagung mit einer Menge von 0,1 bis 0,5 der Puls-Gasmenge des Sauerstoffs und/oder Sauerstoffhaltigen Gasgemisches erfolgt.
